# EUROPÄISCHE PATENTSCHRIFT

(11) **EP 3 621 245 B1**
(45) Veröffentlichungstag und Bekanntmachung des Hinweises auf die Patenterteilung: **09.03.2022**
(21) Anmeldenummer: 18192748.4
(22) Anmeldetag: 05.09.2018
(51) Int. Cl.: H04L 12/40, H04L 29/12

(54) **VERFAHREN ZUM AUTOMATISCHEN KONFIGURIEREN EINES ROUTERS, VERFAHREN ZUR AUTOMATISCHEN ADRESSKONFIGURATION, ROUTER, COMPUTERPROGRAMM UND COMPUTERLESBARES MEDIUM**
METHOD FOR THE AUTOMATIC CONFIGURATION OF ROUTERS, METHOD FOR AUTOMATIC ADDRESS CONFIGURATION, ROUTER, COMPUTER PROGRAM AND COMPUTER READABLE MEDIUM
PROCÉDÉ DE CONFIGURATION AUTOMATIQUE D'UN ROUTEUR, PROCÉDÉ DE CONFIGURATION AUTOMATIQUE D'ADRESSE, ROUTEUR, PROGRAMME INFORMATIQUE ET SUPPORT LISIBLE PAR ORDINATEUR

(43) Veröffentlichungstag der Anmeldung: 11.03.2020
(73) Patentinhaber: Siemens Aktiengesellschaft, 80333 München (DE)
(72) Erfinder: Albrecht, Harald, 90475 Nürnberg (DE); Ehlis, Melanie, 90431 Nürnberg (DE); Höme, Stephan, 91126 Schwabach (DE); Talanis, Thomas, 91336 Heroldsbach (DE)

(56) Entgegenhaltungen:
- EP-A1- 3 091 714
- US-A1- 2016 255 175
- Miles ET AL: "RFC 6221 - Lightweight DHCPv6 Relay Agent", , 2. Mai 2011 (2011-05-02), XP055549187, Gefunden im Internet: URL:https://tools.ietf.org/html/rfc6221#pa ge-7 [gefunden am 2019-01-30]
- J. Jeong ET AL: "RFC 6106 - IPv6 Router Advertisement Options for DNS Configuration", , 2. November 2010 (2010-11-02), XP055549200, Gefunden im Internet: URL:https://tools.ietf.org/html/rfc6106#pa ge-5 [gefunden am 2019-01-30]

## Beschreibung

Die Erfindung betrifft ein Verfahren zum automatischen konfigurieren eines Routers. Darüber hinaus betrifft die Erfindung ein Verfahren zur automatischen Adresskonfiguration, einen Router, ein Computerprogramm und ein computerlesbares Medium.

Maschinen- und Anlagenbauer insbesondere aus dem Bereich der Automatisierungstechnik, möchten auch in Zukunft ihre Maschinen immer einfacher und damit zu weiter sinkenden Kosten in Betrieb setzen können. Der dezentrale Autokonfigurationsmechanismus SLAAC ("Stateless Adress Autoconfiguration", siehe RFC 4862, wobei RFC für "Request For Comments" steht, und RFC 4862 unter https://tools.ietf.org/html/rfc4862 abrufbar ist) von IPv6 erlaubt es, dass sich die einzelnen Teilnehmer autonom ihre eigenen eindeutigen IPv6-Adressen geben können. Damit vereinfacht sich die bisherige Netzwerkkonfiguration von Maschinen, da für den Maschinenbauer die korrekte Adresskonfiguration entfällt.

Ein wichtiger Inbetriebsetzungsfall insbesondere für Maschinenbauer ist dabei der sogenannte Insel-Fall. In einem solchen sind die einzelnen Komponenten einer Maschine, beispielsweise Komponenten bzw. Geräte einer Automatisierungsanlage, miteinander versetzt. Darüber hinaus ist noch wenigstens ein Engineering-System an das Maschinennetz angeschlossen. Allerdings besteht keine Verbindung zu anderen Netzwerken und es fehlt insbesondere jegliche "Infrastruktur", wie beispielsweise ein Router oder ein Namensserver. In einem solchen Falle bildet das Maschinenetz ein Inselnetz.

Im IPv6-Kontext ist dabei besonders wichtig, dass insbesondere Maschinenbauer sofort allein mit Namen anstatt "langen" binären IPv6-Adressen arbeiten können.

In einem Namcnsscrvicc, insbesondere DNS-Service, werden üblicherweise nur globale IPv6-Adressen, also nur GUAs oder U-LAs mit Namen verknüpft.

Problematisch ist dann der Fall, dass über IPv6 von einer Standardapplikation, beispielsweise einem Webbrowser oder einem OPC UA Client, auf eines der Automatisierungsgeräte zugegriffen werden soll bzw. muss. Aufgrund der Autokonfiguration (SLAAC) besitzen zwar sämtliche Geräte IPv6-Adressen. Diese sind jedoch, ohne einen IPv6-Router, sogenannte Link-lokale Adressen (LLAs), wie sie beispielsweise in RFC 7404 behandelt sind.

Die nur Link-lokalen Adressen weichen in ihrer Hantierung und an den Programmierschnittstellen gegenüber den globalen IPv6-Adressen (Global Unicast Addresses - GUAs und Unique Local Addresses - ULAs, siehe RFC 4193) und auch gegenüber IPv4-Adressen dahingehend ab, dass für die LLAs zwingend ein weiterer Parameter nötig ist, der die jeweilige IPv6-Schnittstelle bezeichnet, an der die IPv6-LLA benutzt werden soll (siehe RFC 4291 und RFC 3493). Während etliche Netzwerk-Werkzeuge, wie beispielsweise ping6, traceroute und ssh, die IPv6 LLAs unterstützen, fehlt die LLA-Unterstützung hingegen bei Webbrowsern und vielen 3rd-Party Bibliotheken. Es existiert auch nicht die erforderliche Norm, wie die nötigen Schnittstellen-Bezeichner überhaupt in einem URL dargestellt werden müssen.

Nach Auffassung der Anmelderin wäre gerade dieser offene Kontext, insbesondere ein nicht nur punktuelle Einsetzbarkeit, sehr wichtig. Es wird eine Lösung benötigt, die insbesondere Maschinenbauern auch ganz ohne IT-Kenntnisse den IPv6-Mehr-wert zugänglich macht.

Aus dem Bereich von Heimanwendungen ist es beispielsweise bekannt, dass Heimrouter über die reinen Modem-Funktionen hinaus ein auch für IT-Laien weitgehend transparentes Management des Heim-Netzwerkes anbieten.

Der Anmelderin ist bekannt, dass Heimrouter existieren, die eine statische lokale Heimdomäne aufweisen, in die die Geräte im Heimnetz anhand der von ihnen bei der DHCPv4-Anmeldung übermittelten Gerätenamen (den sogenannten Host-Namen) eingetragen werden und Anfragen danach beantwortet werden können. Die Heimdomäne ist nur im Heimnetz selbst abfragbar und von außen weder sichtbar noch ansprechbar. Diese Domäne ist darüber hinaus statisch vorkonfiguriert und dauerhaft präsent. Auch ist es zwingend erforderlich, dass sich die Heimgeräte via DHCP an dem Heimrouter registrieren.

Die EP 3 001 714 A1 offenbart ein Verfahren zur Bereitstellung eines Namensdienstes in einem industriellen Automatisierungssystem sowie ein Kommunikationsgerät zur Durchführung des Verfahrens. Dabei überprüfen Kommunikationsgeräte eines industriellen Automatisierungssystems mit Hilfe einer Namensdienst-Komponente, ob dem jeweiligen Kommunikationsgerät ein Gerätename mit einem topologischen bzw. hierarchischen Namensbestandteil, der eine räumliche oder hierarchische Anordnung des jeweiligen Geräts bezeichnet, zugeordnet ist. Sofern das Ergebnis dieser Überprüfung positiv ist, behandeln die Kommunikationsgeräte jeweils ihren zugeordneten Gerätenamen als vollständigen Gerätenamen. Fällt die Überprüfung hingegen negativ aus, erzeugen die Kommunikationsgeräte aus mittels Nachrichten mit Router-Bekanntgaben verbreiteten topologischen bzw. hierarchischen Namensbestandteilen sowie einem innerhalb ihres jeweiligen Teilnetzes eindeutigen Namensbestandteil selbständig ihren vollständigen Gerätenamen.

Insbesondere im industriellen Umfeld gilt, dass Geräte oftmals nicht technisch für DHCP ausgestattet sind. Dies gilt beispielsweise oftmals für Automatisierungsgeräte. Einer der Gründe dafür ist, dass DHCP speziell auf den Heim- und Bürobereich ausgerichtet ist.

Es ist daher eine Aufgabe der vorliegenden Erfindung, eine Möglichkeit zu schaffen, dass Netzwerkteilnehmer in einem industriellen Netzwerk, auch wenn diese nicht für DHCP ausgestattet sind, zu allen Zeiten mit Namen anstatt Adressen angesprochen werden können, auch wenn sich das zugehörige Netzwerk zumindest vorübergehend in einem Inselbetrieb, insbesondere ohne Verbindung zu einem Namensserver, befindet.

Diese Aufgabe wird gelöst durch ein Verfahren zum automatischen konfigurieren eines Routers in einem insbesondere industriellen Netzwerk, wobei der Router wenigstens ein mit einem überlagerten Teilnetz und/oder einem überlagerten Router verbundenes oder verbindbares Upstream-Interface und wenigstens ein mit einem unterlagerten Teilnetz verbundenes oder verbindbares Downstream-Interface aufweist, dadurch gekennzeichnet, dass überwacht wird, ob der Router an dem wenigstens einen Upstream-Interface Nachrichten, insbesondere Router-Advertisement-Nachrichten und/oder DHCP-Nachrichten, empfängt, mit denen wenigstes eine Domäne, insbesondere als Bestandteil einer DNS-Suchlisten-Option, bekannt gegeben wird, und für den Fall, dass über einen vorgegebenen Zeitraum keine solche Nachricht empfangen wurde, automatisch ein DNS-Inselbetrieb aktiviert wird, in welchem die DNS Zone eines lokalen DNS Servers des Routers unter Verwendung einer vordefinierten, insbesondere auf dem Router gespeicherten Insel-Domäne konfiguriert wird, und ein Sendemodul des Routers veranlasst wird, wenigstens eine Nachricht, insbesondere wenigstens eine Router-Advertisement-Nachricht, über wenigstens ein Downstream-Interface zu senden, welche die vorkonfigurierte Insel-Domäne, insbesondere als Bestandteil einer DNS-Suchlisten-Option, und bevorzugt eine Adresse des Downstream-Interfaces, umfasst.

Darüber hinaus wird die Aufgabe gelöst durch einen Router mit wenigstens einem Upstream- und wenigstens einem Downstream-Interface, wobei der Router dazu ausgebildet und/oder eingerichtet ist, zu überwachen, ob er an dem wenigstens einen Upstream-Interface Nachrichten, insbesondere Router-Advertisement-Nachrichten und/oder DHCP-Nachrichten, empfängt, mit denen wenigstes eine Domäne, insbesondere als Bestandteil einer DNS-Suchlisten-Option, bekannt gegeben wird, und um für den Fall, dass über einen vorgegebenen Zeitraum keine solche Nachricht empfangen wurde, automatisch einen DNS-Inselbetrieb zu aktivieren, in welchem die DNS Zone eines lokalen DNS Servers des Routers unter Verwendung einer vordefinierten, insbesondere auf dem Router gespeicherten Insel-Domäne konfiguriert wird, und ein Sendemodul des Routers veranlasst wird, über wenigstens ein Downstream-Interface wenigstens eine Nachricht, insbesondere wenigstens eine Router-Advertisement-Nachricht, zu senden, welche die vorkonfigurierte Insel-Domäne, insbesondere als Bestandteil einer DNS-Suchlisten-Option, und bevorzugt eine Adresse des Downstream-Interfaces umfasst.

Die vorliegende Erfindung sieht mit anderen Worten vor, einen Router einzusetzen, welcher dazu ausgebildet und/oder eingerichtet ist, aktiv zu überwachen, ob aus einem überlagerten Netzwerk oder von einem überlagerten Router bzw. Namensserver eine Domäne bekannt gegeben wird, und für den Fall, dass dem nicht so ist, automatisch einen DNS-Inselbetrieb zu aktivieren. In diesem wird insbesondere sowohl die DNS-Zone für den lokalen DNS Server des Routers als auch die DNS Suchliste für das Sendemodul, die insbesondere ein Router Advertiser ist, und bevorzugt die DNS Server IPv6-Adresse automatisch konfiguriert. Es ist somit ein automatischer, adaptiver Wechsel zwischen Inselbetrieb und Infrastrukturbetrieb möglich. Im Inselbetrieb wird dabei als DNS-Zone (vgl. insbesondere RFC 1034 und RFC 1035) und somit auch als DNS Suchliste (siehe RFC 8106) eine vorkonfigurierte DNS Domäne benutzt. Rein beispielhaft sei für eine solche "kunde.elc." genannt.

Bei der DNS Domäne handelt es sich insbesondere um eine solche im Sinne von RFC 7719.

Durch die Erfindung wird es möglich, automatisch einen Inselbetrieb zu erkennen und den DNS-Dienst und insbesondere Router Advertisements entsprechend zu konfigurieren. Insbesondere im Rahmen einer ersten Inbetriebsetzung, beispielsweise von Automatisierungskomponenten, kann bereits eine Infrastruktur, die bei einem Kunden später erwartungsgemäß zur Verfügung stehen wird, emuliert werden. Weiterhin wird es möglich Netzwerk-Teile, denen ein erfindungsgemäßer Router überlagert ist, beispielsweise einzelne Produktionszellen, jederzeit von einer Netz-Infrastruktur zu trennen und später wieder zu integrieren. Über den Zeitraum der Trennung erfolgt eine automatische Konfiguration.

Über die Nachrichten, die über wenigstens ein Downstream-Interface gesendet werden, und die eine Domäne und bevorzugt die Adresse des (jeweiligen) Downstream-Interfaces aufweisen, können sich Teilnehmer aus unterlagerten Netzwerken einen insbesondere vollständig qualifizierten Domainnamen (FQDN, insbesondere im Sinne von RFC 7719) geben. Über die Adresse des Downstream-Interfaces ist insbesondere die Registrierung im DNS Server möglich.

Die Aktivierung des DNS-Inselbetriebes kann dabei sowohl in Reaktion darauf erfolgen, dass über den vorgegebenen Zeitraum überhaupt gar keine Nachrichten, insbesondere Router-Advertisement-Nachrichten, an dem wenigstens einen Upstream-Interface des Routers empfangen werden, oder aber in Reaktion darauf, dass zwar Nachrichten, insbesondere Router-Advertisement-Nachrichten, an wenigstens einem Upstream-Interface des Routers eingehen, mit diesen jedoch keine Domäne bekannt gegeben wird, diese insbesondere keine DNS Suchliste bevorzugt im Sinne von RFC 8106 umfassen.

Unter einem Router ist dabei, insbesondere im Sinne von RFC 4861, jeder Knoten (bzw. jedes Gerät) zu verstehen, welcher Pakete weiterleitet (forwarded), die nicht explizit an ihn adressiert sind.

Bei einem Router kann es sich beispielsweise um ein (separates) Gerät bzw. eine (separate) Hardware-Komponente handeln, welche ausgebildet und/oder eingerichtet ist, diese Funktion zu erfüllen. Selbstverständlich ist es auch möglich, dass ein Router als "Software-Router" bzw. "Soft-Router" vorliegt, etwa in Form eines Computerprogrammes bzw. einer Computerprogramm-Sammlung, die auf einer zu dessen/deren Ausführung ausgebildeten Einrichtung, etwa einem PC oder einer anderen Recheneinrichtung oder einem beliebigen anderen Gerät, abgelegt ist. Ein Router bzw. die Router-Funktion kann beispielsweise auch in eine Steuerung, etwa eine speicherprogrammierbare Steuerung (SPS) eines Automatisierungssystems oder in ein anderes Gerät integriert sein, dies sowohl in Form von Hardware- als auch Software.

Unter dem Begriff Router im Sinne der vorliegenden Anmeldung fallen sämtliche der vorgenannten Möglichkeiten, insbesondere auch "Soft-Router" sowie Geräte, die eigentlich andere Funktionen ausführen bzw. einem anderen Zweck dienen, aber auch eine Router-Funktion übernehmen, also auch Daten weiterleiten, die nicht explizit an sie adressiert sind. Zum Beispiel kann auch ein Automatisierungsgerät, etwa eine insbesondere speicherprogrammierbare Steuerung, mit Router-Funktion als Router gemäß der vorliegenden Erfindung zu erachten sein, bzw. wenn in diese eine separate Einrichtung, die entsprechend ausgebildet und/oder eingerichtet ist, integriert ist, umfasst eine solche Steuerung einen Router nach der vorliegenden Erfindung.

Bei einem Upstream-Interface, also einer Upstream-Schnittstelle eines Routers handelt es sich insbesondere um ein Interface, welches in Richtung wenigstens eines überlagerten Subnetzes und/oder Routers zeigt. Ein Downstream-Interface, also eine Downstream-Schnittstelle, ist insbesondere ein solches, welches in Richtung wenigstens eines unterlagerten Netzes bzw. Subnetzes zeigt.

Üblicherweise hat ein Router wenigstens ein Upstream-Interface und wenigstens ein Downstream-Interface. Es kann aber auch sein, dass ein Router nur ein einziges (physisches) Interface aufweist, und die Unterscheidung zwischen Up- und Downstream allein Software-basiert erfolgt. Als Interface kann ein Port eines Routers dienen.

DNS-Informationen können beispielsweise über an einem Upstream-Interface ankommende Router-Advertisement-Nachrichten gelernt werden. Auch ist es möglich, dass DNS-Informationen bevorzugt als Teil einer Präfixdelegation (insbesondere gemäß RFC 3633) mit vom DHCP-Server ankommen. Entsprechend wird bevorzugt sowohl überwacht, ob Router-Advertisement-Nachrichten ankommen, mit denen wenigstens eine Domäne bekannt gegeben wird, als auch, ob DHCP-Nachrichten ankommen, mit denen wenigstens eine Domäne bekannt gegeben wird.

Eine besonders bevorzugte Ausführungsform des erfindungsgemäßen Verfahren zeichnet sich dadurch aus, dass für den Fall, dass insbesondere im DNS-Inselbetrieb an dem wenigstens einen Upstream-Interface eine Nachricht empfangen wird, mit der wenigstes eine Domäne, insbesondere als Bestandteil einer DNS-Suchlisten-Option, bekannt gegeben wird, automatisch in einen DNS-Normalbetrieb gewechselt wird, in welchem die DNS Zone des lokalen DNS Servers des Routers unter Verwendung der wenigstens einen Domäne aus der an dem Upstream-Interface empfangenen Nachricht konfiguriert wird, und ein Sendemodul des Routers veranlasst wird, über wenigstens ein Downstream-Interface wenigstens eine Nachricht zu senden, die die wenigstens eine Domäne aus der an dem wenigstens einen Upstream-Interface empfangenen Nachricht, insbesondere als Bestandteil einer DNS-Suchlisten-Option, und bevorzugt eine Adresse des Downstream-Interfaces umfasst.

Der erfindungsgemäße Router ist entsprechend bevorzugt dazu ausgebildet und/oder eingerichtet, für den Fall, dass insbesondere im DNS-Inselbetrieb an dem wenigstens einen Upstream-Interface eine Nachricht empfangen wird, mit der wenigstes eine Domäne, insbesondere als Bestandteil einer DNS-Suchlisten-Option, bekannt gegeben wird, automatisch in einen DNS-Normalbetrieb zu wechseln, in welchem die DNS Zone des lokalen DNS Servers unter Verwendung der wenigstens einen Domäne aus der an dem wenigstens einen Upstream-Interface empfangenen Nachricht konfiguriert wird, und ein Sendemodul des Routers veranlasst wird, über wenigstens ein Downstream-Interface wenigstens eine Nachricht zu senden, die die wenigstens eine Domäne aus der an dem wenigstens einen Upstream-Interface empfangenen Nachricht, insbesondere als Bestandteil einer DNS-Suchlisten-Option, und bevorzugt eine Adresse des Downstream-Interfaces umfasst.

Gemäß diesen Ausführungsformen wird, sobald (wieder) wenigstens eine Domäne insbesondere von einem überlagerten Router bekannt gegeben wird, der DNS-Inselbetrieb auch wieder automatisch beendet. Außerhalb des Inselbetriebes, im DNS-Normalbetrieb, wird dann automatisch diejenige DNS Domäne insbesondere als DNS-Zone und DNS-Suchliste verwendet, die aus überlagerten Nachrichten, insbesondere Router-Advertisement-Nachrichten, gelernt wird.

Für den Fall, dass ein Router mehr als ein Downstream-Interface aufweist, kann vorgesehen sein, dass im DNS-Inselbetrieb zusammen mit der Insel-Domäne und/oder im DNS-Normalbetrieb zusammen mit der wenigstens einen an dem wenigstens einen Upstream-Interface empfangenen Domäne ein Name, insbesondere Host-Name, des jeweiligen Donwstream-Interfaces über das jeweilige Downstream-Interface gesendet wird. Dann ist insbesondere vorgesehen, dass der Name des jeweiligen Downstream-Interfaces der Insel-Domäne bzw. an dem wenigstens einen Upstream-Interface empfangenen Domäne vorangestellt ist. Auf diese Weise können verschiedenen Subnetzen, die mit verschiedenen Downstream-Interfaces eines Routers verbunden sind, verschiedene Domänen bekannt gegeben werden.

Bevorzugt kann zusätzlich der in der EP 3 091 714 A1 der Siemens AG offenbarte Mechanismus eingesetzt werden, bei dem aus der gelernten Domäne und einem dem Router bzw. für den Fall, dass dieser mehrere Downstream-Interfaces aufweist, dem jeweiligen Downstream-Interface zugeordneten, Namen eine eindeutige Domain gebildet wird. Rein beispielhaft sei für eine gelernte Domäne "Maschinenbauer.de." genannt und für den Namen eines Routers bzw. Downstream-Interfaces "ibs-elchbox", wobei sich dann die eindeutige Domain "ibs-elchbox.maschinenbauer.de." ergeben würde.

Die Adresse des DNS-Servers, die bevorzugt in der wenigstens einen über das wenigstens eine Downstream-Interface gesendeten Nachricht enthalten ist, wird insbesondere als Bestandteil einer DNS-Server-Option, bevorzugt gemäß RFC 8106 gesendet.

Das erfindungsgemäße Verfahren kann sich weiterhin dadurch auszeichnen, dass der Router ein DNS-Insel-Detektionsmodul umfasst, und von diesem überwacht wird, ob an dem wenigstens einen Upstream-Interface Nachrichten, insbesondere Router-Advertisement-Nachrichten, empfangen werden, die wenigstens eine Domäne, bevorzugt als Bestandteil einer DNS-Suchlisten-Option, umfassen. Alternativ oder zusätzlich kann vorgesehen sein, dass der Router ein DNS-Insel-Konfigurations-Modul umfasst und dieses die DNS Zone des lokalen DNS Servers im DNS-Inselbetrieb unter Verwendung der vordefinierten Domäne bzw. im DNS-Normalbetrieb unter Verwendung der wenigstens einen an dem wenigstens einen Upstream-Interface empfangenen Domäne konfiguriert, und/oder das Sende-Modul veranlasst, die wenigstens eine Nachricht im DNS-Inselbetrieb mit der vordefinierten Domäne oder im DNS-Normalbetrieb mit der wenigstens einen an dem wenigstens einen Upstream Interface empfangenen Domäne und bevorzugt der Adresse des Downstream-Interfaces zu senden.

Der erfindungsgemäße Router zeichnet sich in Weiterbildung entsprechend dadurch aus, dass er ein DNS-Insel-Detektionsmodul umfasst, und das DNS-Insel-Detektionsmodul ausgebildet und/oder eingerichtet ist, um zu überwachen, ob an dem wenigstens einen Upstream-Interface Nachrichten empfangen werden, die wenigstes eine Domäne, insbesondere als Bestandteil einer DNS-Suchlisten-Option, umfassen. Alternativ oder zusätzlich kann vorgesehen sein, dass der erfindungsgemäße Router ein DNS-Insel-Konfigurationsmodul umfasst, und das DNS-Insel-Konfigurationsmodul ausgebildet und/oder eingerichtet ist, um die DNS Zone des lokalen DNS Servers im DNS-Inselbetrieb unter Verwendung der vordefinierten Domäne oder im DNS-Normalbetrieb unter Verwendung der wenigstes einen an dem wenigstens einen Upstream-Interface empfangenen Domäne zu konfigurieren, und/oder das Sende-Modul zu veranlassen, die wenigstens eine Nachricht im DNS-Inselbetrieb mit der vordefinierten Domäne oder im DNS-Normalbetrieb mit der wenigstens einen an dem wenigsten einen Upstream-Interface empfangenen Domäne und bevorzugt der Adresse des Downstream-Interfaces zu senden.

In weiterer besonders bevorzugter Ausgestaltung des erfindungsgemäßen Verfahrens ins ferner vorgehen, dass überwacht wird, ob an dem wenigstens einen Upstream-Interface Nachrichten, insbesondere DHCP-Nachrichten, empfangen werden, mittels derer wenigstes ein IPv6-Präfix insbesondere gemäß RFC 3633, delegiert wird, und für den Fall, dass über einen vorgegebenen Zeitraum keine solche Nachricht empfangen wurde, automatisch ein IPv6-Inselbetrieb aktiviert wird, in welchem ein Sendemodul des Routers veranlasst wird, über wenigstens ein Downstream-Interface wenigstens eine Nachricht, insbesondere wenigstens eine Router-Advertisement-Nachricht, die ein Insel-Präfix umfasst, zu senden, wobei für den Fall, dass bisher kein Präfix erfolgreich delegiert wurde, ein vordefiniertes, insbesondere auf dem Router gespeichertes Insel-Präfix verwendet wird, und für den Fall, dass ein zuvor delegiertes Präfix verfügbar ist, dieses noch verfügbare Präfix als Insel-Präfix verwendet wird.

Der erfindungsgemäße Router kann sich in bevorzugter Ausgestaltung entsprechend dadurch auszeichnen, dass er ausgebildet und/oder eingerichtet ist, zu überwachen, ob an dem wenigstens einen Upstream-Interface Nachrichten, insbesondere DHCP-Nachrichten, empfangen werden, mittels derer wenigstes ein IPv6-Präfix, insbesondere gemäß RFC 3633, delegiert wird, und für den Fall, dass über einen vorgegebenen Zeitraum keine solche Nachricht empfangen wurde, automatisch einen IPv6-Inselbetrieb zu aktivieren, in welchem ein Sendemodul des Routors veranlasst wird, über wenigstens ein Downstream-Interface wenigstens eine Nachricht, insbesondere wenigstens eine Router-Advertisement-Nachricht, zu senden, die ein Insel-Präfix umfasst, wobei für den Fall, dass bisher kein Präfix erfolgreich delegiert wurde, ein vordefiniertes, insbesondere auf dem Router gespeichertes Insel-Präfix verwendet wird, und für den Fall, dass ein zuvor delegiertes Präfix verfügbar ist, dieses noch verfügbare Präfix als Insel-Präfix verwendet wird.

Gemäß dieser besonders vorteilhaften Ausgestaltung wird nicht nur aktiv überwacht, ob aus überlagerten Nachrichten, insbesondere Router-Advertisement-Nachrichten, eine DNS-Domäne gelernt wird, sondern auch ob IPv6-Präfixe empfangen werden bzw. eine Präfix-Delegation, insbesondere im Sinne von RFC 3633, erfolgreich war oder fehlgeschlagen ist. In Abhängigkeit des Ergebnisses dieser Überprüfung wird automatisch ein IPv6-Inselbetrieb aktiviert. Dieser wird zum einen aktiviert, wenn überhaupt keine Nachrichten an dem wenigstens einen Upstream-Interface empfangen werden, oder aber, wenn zwar Nachrichten empfangen werden, diese jedoch kein IPv6 Präfix erfolgreich delegieren. Dies kann beispielsweise der Fall sein, wenn auf eine Anfrage kein Präfix zugewiesen wird, oder eine Erneuerungs- bzw. Verlängerungsanfrage für ein bereits erhaltenes Präfix abgelehnt wird.

Diese Ausgestaltung macht es auch möglich, dass Anwender, beispielswiese Automatisierungsanwender, IPv6 einsetzen können, ohne über IT-Know-How verfügen zu müssen.

Dabei sind der IPv6- und der DNS-Inselbetrieb funktional getrennt, weshalb das erfindungsgemäße Verfahren beispielsweise auch mit Heimroutern durchgeführt werden kann, die zwar die IPv6 Präfix-Delegation beherrschen, aber teilweise keine Domäne für ein unterlagertes Netzwerk bereitstellen. Beispielsweise kann dann ein solcher Heimrouter über einem erfindungsgemäßen Router angeschlossen werden. Werden IPv6-Präfixe erfolgreich delegiert, wird der erfindungsgemäße Router im IPv6-Normalbetrieb arbeiten. Gleichzeitig wird er, wenn keine Domäne bereitgestellt wird, im DNS-Inselbetrieb arbeiten.

Der erfindungsgemäße Router, insbesondere ein DHCPv6 Client des erfindungsgemäßen Routers, kann in Weiterbildung ausgebildet und/oder eingerichtet sein, um empfangene Präfixe für eine jeweils vorgegeben Dauer zu speichern und dann zu löschen. In der Regel wird ein Präfix bzw. werden - in dem Falle, dass mehr als ein Präfix an einen Router delegiert wird - werden Präfixe in einem Router, insbesondere von/in einem DHCPv6 Client dieses für eine vorgegebene Zeitspanne gespeichert. Die Zeitspanne entspricht zweckmäßiger Weise einer zu dem bzw. den Präfixen gehörenden Lebenszeit, die mit diesem bzw. diesen an den Router übermittelt wurde. Es kann wenigstens ein neues Präfix angefordert werden, bevor eines oder mehrere aktuell gespeicherte Präfixe "ablaufen". Dies muss jedoch nicht immer erfolgreich sein, so dass es auch passieren kann, dass (aktuell) kein Präfix in einem Router verfügbar ist. Auch vor dem Empfang eines oder mehrerer erster Präfixe, beispielsweise bei einer ersten Inbetriebnahme, ist (noch) kein Präfix in dem Router verfügbar.

Das Prinzip der sogenannten "Präfix-Delegation" (engl.: "Prefix Delegation") ist aus dem RFC 3316 bekannt. Gemäß diesem weist ein hierarchisch überlagerter Router - der sogenannte "delegating router" - einem hierarchisch unterlagerten Router - dem sogenannten "requesting router" - eines oder mehrere Subnetze automatisch zu.

In dem RFC 3633 (https://tools.ietf.org/ html/rfc3633) ist weiterhin ein Verfahren zur Delegation von IPv6-Präfixen auf Basis von DHCPv6 beschrieben. Dabei werden IPv6-Präfixe auf Anforderung durch einen delegierenden Router, der einen DHCP-Server darstellt bzw. als solcher fungiert, zur Verbreitung durch einen anfordernden Router, der einen DHCP-Client umfasst bzw. bildet bzw. als solcher fungiert, freigegeben. Im Rahmen des erfindungsgemäßen Verfahrens bzw. von dem erfindungsgemäßen Router werden bevorzugt eines oder mehrere Präfixe empfangen, die gemäß dem Verfahren nach RFC 3633 auf Basis von DHCPv6 delegiert wurden.

Der erfindungsgemäße Router weist bevorzugt wenigstens einen DHCPv6 Client auf.

Was das im IPv6-Inselbetrieb zu verwendende Insel-Präfix angeht, stehen insbesondere zwei Möglichkeiten zur Verfügung. Für den Fall, dass bisher (insbesondere seit Neustart) kein DHCPv6 Präfix erfolgreich geleast werden konnte (beispielsweise bei einem Neustart), kann das vordefinierte, insbesondere in dem Router gespeicherte Ersatz-Präfix als Inselpräfix verwendet werden. Rein beispielhaft sei fdaa:dead:beef:cafe::/64 für ein Präfix genannt. Existiert hingegen ein DHCPv6 Präfix, dann kann dieses (insbesondere auch wenn es bereits abgelaufen ist bzw. nicht erfolgreich erneuert/verlängert wurde) weiter verwendet werden, insbesondere um einen stabilen Netzbetrieb zu ermöglichen.

Eine weitere bevorzugte Ausführungsform des erfindungsgemäßen Verfahrens zeichnet sich dadurch aus, dass für den Fall, dass insbesondere im IPv6-Inselbetrieb an dem wenigstens einen Upstream-Interface eine Nachricht, insbesondere DHCP-Nachricht, empfangen wird, mittels derer wenigstes ein IPv6-Präfix bevorzugt gemäß RFC 3633 delegiert wird, automatisch in einen IPv6-Normalbetrieb gewechselt wird, in welchem ein Sendemodul des Routers veranlasst wird, über wenigstens ein Downstream-Interface wenigstens eine Nachricht zu senden, die wenigstens ein IPv6-Präfix aus der an dem wenigstens einen Upstream-Interface empfangenen Nachricht umfasst.

Entsprechend ist der erfindungsgemäße Router in Weiterbildung dazu ausgebildet und/oder eingerichtet, für den Fall, dass insbesondere im IPv6-Inselbetrieb an dem wenigstens einen Upstream-Interface eine Nachricht, insbesondere DHCP-Nachricht, empfangen wird, mittels derer wenigstes ein IPv6-Präfix bevorzugt gemäß RFC 3633 delegiert wird, automatisch in einen IPv6-Normalbetrieb zu wechseln, in welchem ein Sendemodul des Routers veranlasst wird, über wenigstens ein Downstream-Interface wenigstens eine Nachricht zu senden, die wenigstens ein IPv6-Präfix aus der an dem wenigstens einen Upstream-Interface empfangenen Nachricht umfasst.

Bevorzugt wird das Insel-Präfix in Form einer Prefix Information, insbesondere gemäß RFC 4861, in der wenigstens einen Nachricht bevorzugt zusammen mit wenigstens einem SLAAC-Flag (insbesondere A=1) gesendet.

Der erfindungsgemäße Router ist entsprechend in Weiterbildung ausgebildet und/oder eingerichtet, um das Insel-Präfix in Form einer Prefix Information Option, insbesondere gemäß RFC 4861, in der wenigstens einen Nachricht bevorzugt zusammen mit wenigstens einem SLAAC-Flag zu senden.

Besonders bevorzugt werden Präfixe in den Nachrichten zusammen mit den SLAAC-Flags "A" (address autoconfiguration) und "L" (on-link) gesendet.

Es sei angemerkt, dass es sich bei der wenigstens einen Nachricht, insbesondere Router-Advertisement-Nachricht, die im DNS-Insel- bzw. DNS-Normalbetrieb über wenigstens ein Downstream-Interface gesendet wird, und welche eine Domäne und bevorzugt die Adresse des DNS Servers umfasst, und bei der wenigstens einen Nachricht, insbesondere Router-Advertisement-Nachricht, die im IPv6-Insel- oder IPv6-Normalbetrieb über wenigstens ein Downstream-Interface gesendet wird, und ein Präfix umfasst, bevorzugt um die gleiche wenigstens eine Nachricht handeln kann. Das bedeutet, eine (Insel- oder über das wenigstens eine Upstream-Interface empfangene) Domäne und ein (Insel- oder über das wenigstens eine Upstream-Interface empfangenes) Präfix können jeweils gemeinsam in einer Nachricht, insbesondere Router-Advertisement-Nachricht, einem oder mehreren unterlagerten Netzwerken bekannt gegeben werden.

Weiterhin kann vorgesehen sein, dass Nachrichten, insbesondere Router-Advertisement-Nachrichten, die eine (Insel-)Domäne und insbesondere ein Präfix umfassen, zyklisch und/oder auf Anfrage über wenigstens ein Downstream-Interface gesendet werden.

Gemäß einer weiteren Ausführungsform ist vorgesehen, dass der Router ein IPv6-Insel-Detektionsmodul umfasst, und von dem IPv6-Insel-Detektionsmodul überwacht wird, ob an dem wenigstens einen Upstream-Interface Nachrichten empfangen werden, mittels derer wenigstes ein IPv6-Präfix delegiert wird, und/oder der Router ein IPv6-Insel-Konfigurations-Modul umfasst, und das IPv6-Insel-Konfigurations-Modul im IPv6-Inselbetrieb das Sendemodul veranlasst, die wenigstens eine ein Insel-Präfix umfassende Nachricht und insbesondere im IPv6-Normalbetrieb die wenigstens eine Nachricht, die wenigstens ein IPv6-Präfix aus der an dem wenigstens einen Upstream-Interface empfangenen Nachricht umfasst, zu senden.

Entsprechend kann sich der erfindungsgemäße Router dadurch auszeichnen, dass er ein IPv6-Insel-Detektionsmodul umfasst, welches ausgebildet und/oder eingerichtet ist, zu überwachen, ob an dem wenigstens einen Upstream-Interface Nachrichten empfangen werden, mittels derer wenigstes ein IPv6-Präfix delegiert wird, und/oder der Router ein IPv6-Insel-Konfigurationsmodul umfasst, und das IPv6-Insel-Konfigurationsmodul ausgebildet und/oder eingerichtet ist, im IPv6-Inselbetrieb die Sende-Modul zu veranlassen, die wenigstens eine ein Insel-Präfix umfassende Nachricht und insbesondere im IPv6-Normalbetrieb die wenigstens eine Nachricht, die wenigstens ein IPv6-Präfix aus der an dem wenigstens einen Upstream-Interface empfangenen Nachricht umfasst, zu senden.

Das IPv6-Insel-Konfigurationsmodul ist insbesondere ausgebildet und/oder eingerichtet, um in Reaktion darauf, dass in den Inselbetrieb gewechselt wird, ein Präfix für das Downstream Netzwerk zu konfigurieren.

Das DNS-Insel-Detektionsmodul und/oder das DNS-Insel-Konfigurationsmodul und/oder das IPv6-Insel-Detektionsmodul und/oder das IPv6-Insel-Konfigurationsmodul können jeweils (rein) Software-implementiert sein, beispielsweise durch ein Programm gegeben sein, dass auf allgemeiner, ohnehin vorhandener Hardware des Routers läuft, oder (rein) Hardware-implementiert sein oder auch durch eine Kombination aus Software und insbesondere speziell für das jeweilige Modul bzw. die Module vorgesehene Hardware umfassen bzw. durch eine solche gegeben sein.

Das Sendemodul ist insbesondere für das korrekte Abwickeln des Router-Advertisement-Protokolls ausgebildet und/oder eingerichtet. Das Sendemodul kann eine Kombination von Hard- und Software umfassen oder auch rein Software- oder rein Hardware-implementiert sein. Das Sendemodul kann beispielsweise einen Router-Advertisement Daemon (RAD oder radvd) umfassen oder durch einen solchen gegeben sein, ggf. in Kombination mit geeigneter Hardware.

Das Sendemodul wird bevorzugt von einem DNS-Insel-Konfigurationsmodul und/oder einem IPv6-Insel-Konfigurationsmodul im Inselbetrieb automatisch konfiguriert, wenigstens eine Nachricht, insbesondere Router-Advertisement-Nachricht, mit einer Insel-Domäne und bevorzugt mit der Adresse des Downstream-Interfaces und/oder einem Insel-Präfix zu senden.

Eine bevorzugt automatische Konfiguration des Sendemoduls kann beispielsweise über geeignete Software, etwa einen Router-Advertisement-Daemon erfolgen. Als Beispiel seien die Router-Advertisement Daemonen "radvd" oder "RAD" (insbesondere Linux) sowie "rtadvd" (insbesondere OpenBSD) genannt. Insbesondere Router Advertisement Daemonen können über Konfigurationsdateien instruiert werden, welche Informationen als Teil von Router-Advertisement-Nachrichten ausgestrahlt werden sollen.

Beispielsweise kann insbesondere von einem DNS-Insel-Konfigurationsmodul und/oder einem IPv6-Insel-Konfigurationsmodul eine Konfigurationsdatei mit wenigstens einer Insel-Domäne bzw. einer von einem überlagerten Router empfangenen Domäne und/oder einem Inselpräfix bzw. eine erfolgreich delegierten Präfix erstellt werden, da es auch möglich ist, dass mit wenigstens einer Vorlage-Datei ("Template") gearbeitet wird. Dann kann beispielsweise ein Platzhalter in einer Vorlage-Datei mit einer entsprechenden Domäne bzw. einem entsprechenden Präfix ausgefüllt werden. Ein DNS- und/oder IPv6-Insel-Konfigurationsmodul kann auch wenigstens eine Vorlagedatei/Template fest einprogrammiert haben.

Eine Konfigurationsdatei kann an einer bekannten/vereinbarten Stelle insbesondere auf dem wenigstens einen unterlagerten Router gespeichert sein. Sie kann insbesondere von einem DNS-Insel-Konfigurationsmodul und/oder einem IPv6-Insel-Konfigurationsmodell erstellt bzw. neu (mit neuem Inhalt) beschrieben werden. Das Sendemodul, insbesondere ein Router-Advertisement Daemon dieses, wird dann bevorzugt veranlasst, eine neu erstellte bzw. modifizierte Konfigurationsdatei (neu) zu lesen. Dies ist beispielsweise durch ein Stoppen und Neustarten insbesondere des Daemons möglich. Im Anschluss an die Übernahme einer neuen/modifizierten Konfigurationsdatei können Router-Advertisement-Nachrichten gemäß der neuen/modifizierten Konfigurationsdatei gesendet werden.

Das DNS-Insel-Detektionsmodul und/oder das DNS-Insel-Konfigurationsmodul und/oder das IPv6-Insel-Detektionsmodul und/oder das IPv6-Insel-Konfigurationsmodul können jeweils (rein) Software-implementiert sein, beispielsweise durch ein Programm gegeben sein, dass auf allgemeiner, ohnehin vorhandener Hardware des Routers läuft, oder (rein) Hardware-implementiert sein oder auch durch eine Kombination aus Software und insbesondere speziell für das jeweilige Modul bzw. die Module vorgesehene Hardware umfassen bzw. durch eine solche gegeben sein.

Ein weiterer Gegenstand der Erfindung ist ein Verfahren zur automatischen Adresskonfiguration eines Teilnehmers eines insbesondere industriellen Netzwerkes, bei dem wenigstens ein Netzwerkteilnehmer von einem überlagerten Router, der unter Durchführung des Verfahrens nach einem der vorhergehenden Ansprüche konfiguriert wird oder wurde, wenigstens eine Nachricht, insbesondere eine Router-Advertisement-Nachricht, empfängt, und sich der wenigstens eine Teilnehmer unter Verwendung der von dem Router empfangenen Nachricht einen Namen, insbesondere einen vollständig qualifizierten Domainnamen, und bevorzugt eine globale IPV6-Adresse zuordnet.

Ein Netzwerkteilnehmer eines industriellen Netzes kann beispielsweise in Form eines Automatisierungsgerätes vorliegen.

Bei dem wenigstens einen Netzwerkteilnehmer handelt es insbesondere um einen solchen, der technisch nicht für DHCP ausgestattet ist.

Darüber hinaus betrifft die Erfindung ein Computerprogramm, das Programmcodemittel zur Durchführung der Schritte des erfindungsgemäßen Verfahrens zum automatischen Konfigurieren eines Routers bzw. des erfindungsgemäßen Verfahrens zur automatischen Adresskonfiguration eines Teilnehmers eines insbesondere industriellen Netzwerkes umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zum automatischen Konfigurieren eines Routers bzw. des erfindungsgemäßen Verfahrens zur automatischen Adresskonfiguration eines Teilnehmers eines insbesondere industriellen Netzwerkes durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Darstellung eines Automatisierungsnetzes im Inselbetrieb;
- FIG 2: eine rein schematische Darstellung des Netzes aus Figur 1, dem ein Ausführungsbeispiel eines erfindungsgemäßen Routers überlagert ist; und
- FIG 3: eine rein schematische vergrößerte Darstellung des Routers aus FIG 2.

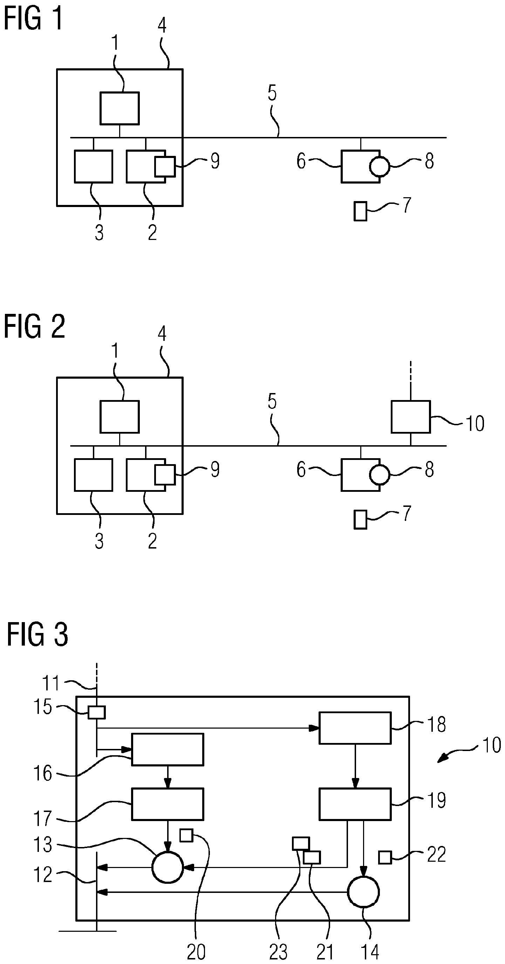

Die FIG 1 stellt in rein schematischer Darstellung einen insbesondere für Maschinenbauer wichtigen Inbetriebsetzungsfall.

Dabei sind mehrere Automatisierungskomponenten 1, 2, 3 einer Maschine 4 miteinander über ein Netzwerk 5 vernetzt. Die Automatisierungskomponenten werden bei dem dargestellten Ausführungsbeispiel konkret durch eine speicherprogrammierbare Steuerung 1 (im Folgenden als SPS abgekürzt), und zwei 10-Geräte 2, 3 gebildet.

Weiterhin ist noch ein Engineering-Werkzeug 6 an das Maschinennetz 5 angeschlossen.

Es besteht keine Verbindung zu anderen Netzwerken und es fehlt insbesondere jegliche "Infrastruktur", wie beispielsweise ein Router oder ein Namensserver. Das Maschinenetz 5 bildet daher ein Inselnetz.

Der dezentrale Autokonfigurationsmechanismus SLAAC ("Stateless Adress Autoconfiguration", siehe RFC 4862) von IPv6 erlaubt es, dass sich die einzelnen Teilnehmer eines Netzes autonom ihre eigenen eindeutigen IPv6-Adressen geben können. Damit vereinfacht sich die Netzwerkkonfiguration von Maschinen, da für den Maschinenbauer die korrekte Adresskonfiguration entfällt.

Vorliegend haben sich die Teilnehmer 1, 2, 3, 6 nach deren Aktivierung über SLAAC jeweils autonom ihre eigenen eindeutigen IPv6-Adresse gegeben. Aufgrund der Autokonfiguration besitzen sämtliche Teilnehmer 1, 2, 3, 6 IPv6-Adressen. Diese sind jedoch, ohne die fehlende Infrastruktur, insbesondere ohne einen IPv6-Router, sogenannte Link-lokale Adressen (LLAs), wie sie beispielsweise in RFC 7404 behandelt sind.

Möchte der Maschinenbauer, der in FIG 1 nur schematisch durch ein mit dem Bezugszeichen 7 versehenes Blockelement dargestellt ist, beispielsweise über einen Webbrowser oder einen OPC UA Client 8 auf eine oder mehrere der der Automatisierungskomponenten 1, 2, 3 zugreifen, etwa das IO-Gerät 2, welches einen Web Server 9 umfasst, ergeben sich Probleme.

Die aufgrund der Autokonfiguration nur Link-lokalen Adressen (LLAs) der Komponenten 1, 2, 3, 6 weichen in ihrer Hantierung und an den Programmierschnittstellen gegenüber globalen IPv6-Adressen (Global Unicast Addresses - GUAs und Unique Local Addresses - ULAs, siehe RFC 4193) und auch gegenüber IPv4-Adressen dahingehend ab, dass für die LLAs zwingend ein weiterer Parameter nötig ist, der die jeweilige IPv6-Schnittstelle bezeichnet, an der die IPv6-LLA benutzt werden soll (siehe RFC 4291 und RFC 3493). Insbesondere bei Webbrowsern und vielen 3rd-Party Bibliotheken fehlt eine LLA-Unterstützung vollständig.

Diesem Problem wird damit begegnet, dass an das Inselnetz 5 ein Ausführungsbeispiel eines erfindungsgemäßen Routers 10 angeschlossen wird, der einen dem Inselnetz überlagerten Router 10 bildet (siehe FIG 2). Es sei angemerkt, dass die in FIG 2 von dem Router 10 nach oben abgehenden, gestrichelte Linie verdeutlichen soll, dass mit dem Router 10 ein Upstream-Netzwerk überlagert sein kann.

Der Router 10 ist ausgebildet und eingerichtet, den Inselbetrieb zu erkennen und in einem solchen eine Autokonfiguration vorzunehmen, worauf im Folgenden näher eingegangen wird.

Der Router 10 umfasst konkret ein Upstream-Interface 11 und ein Downstream-Interface 12. Über das Upstream-Interface 11 ist der Router mit einem überlagerten Netz bzw. Router verbindbar und über das Downstream-Interface 12 ist der Router 10 mit dem Inselnetz 5 verbunden. Es sei angemerkt, dass m Inselbetrieb keinen Verbindung zu einem überlagerten Netz bzw. Router über das Upstream-Interface 11 besteht.

Der Router 10 umfasst ein Sendemodul 13 einen DNS-Server 14 und einen DHCPv6-Client 15.

Das Sendemodul 13 ist für das korrekte Abwickeln des Router-Advertisement-Protokolls ausgebildet und eingerichtet und wird vorliegend durch einen Router-Advertisement Daemon, konkret einen radvd gebildet. Diese Komponenten weisen auch konventionelle, vorbekannte Router auf.

Der DNS-Server 14 stellt dabei in an sich bekannter Weise einen Namensdienst für (ein) dem Router 10 unterlagerte(s) Netz(e) bereit. Unter einem Namensdienst ist dabei in an sich bekannter Weise ein Dienst zu verstehen, welcher (numerischen) IP-Adressen, etwa IPv4 oder IPv6 IP-Adressen, Namen zuordnet, insbesondere Domainnamen, von Geräten, Rechnern, Diensten usw. Das Domain Name System (DNS) ist ein solcher Dienst, dessen Hauptaufgabe in der Regel in der Beantwortung von Anfragen zur Namensauflösung, also Übersetzung von Namen in Adressen, insbesondere in IP-basierten Netzwerken besteht. Zu dem DNS gehörige Standards sind insbesondere der RFC 1034 und RFC 1035. Ein Server, der einen Namensdienst anbietet, wird auch als Namensdienst-Server (engl.: Nameserver) bezeichnet, im Falle von DNS spricht man auch von einem DNS-Server.

Der DHCPv6 Client 15 dient in an sich bekannter Weise dazu, von einem DHCPv6-Server IPv6 Konfigurations-Informationen zu erhalten.

Neben den konventionellen Komponenten umfasst der Router 10 weiterhin ein IPv6-Insel-Detektionsmodul 16, ein IPv6-Insel-Konfigurations-Modul 17, ein DNS-Insel-Detektionsmodul 18 und ein DNS-Insel-Detektionsmodul 19.

Der Router 10, konkret dessen IPv6-Insel-Detektionsmodul 16 ist dazu ausgebildet und eingerichtet, zu überwachen bzw. zu erkennen, ob an dem Upstream-Interface 11 DHCP-Nachrichten empfangen werden, mittels derer wenigstes ein IPv6-Präfix gemäß RFC 3633 delegiert wird, und für den Fall, dass über einen vorgegebenen Zeitraum keine solche Nachricht empfangen wurde (ggf. gar keine Nachrichten eingegangen sind), automatisch einen IPv6-Inselbetrieb zu aktivieren und dem IPv6-Insel-Konfigurations-Modul 17 den IPv6-Inselbetrieb zu signalisieren.

Das IPv6-Insel-Konfigurations-Modul 17 ist ausgebildet und eingerichtet, um im IPv6-Inselbetrieb das Sendemodul 13 automatisch zu konfigurieren und zu veranlassen, über das Downstream-Interface 12 Router-Advertisement-Nachrichten mit einem Insel-Präfix zu senden, wobei für den Fall, dass bisher kein Präfix erfolgreich delegiert wurde, ein vorkonfiguriertes, auf dem Router 10 gespeichertes Insel-Präfix verwendet wird, und für den Fall, dass ein zuvor delegiertes, ggf. bereits abgelaufenes Präfix verfügbar ist, dieses noch verfügbare Präfix als Insel-Präfix verwendet wird.

Bei dem vorliegenden Fall der ersten Inbetriebnahme und dem Mangel einer Infrastruktur kommen überhaupt keine DHCP-Nachrichten an dem Upstream-Interface 11 des Routers 10 an, und es existiert auch noch kein delegiertes IPv6-Präfix, insbesondere ist in dem DHCPv6-Client noch kein solches gespeichert. Nachdem der vorgegebene Zeitraum abgelaufen ist, ohne dass DHCP-Nachrichten am Upstream-Interface 11 eingegangen sind, wird daher und das vorkonfigurierte Insel-Präfix verwendet.

Ein Router Advertisement Daemon kann in an sich bekannter Weise über Konfigurationsdateien instruiert werden, welche Informationen als Teil von Router-Advertisement-Nachrichten ausgestrahlt werden sollen.

Vorliegend erfolgt eine entsprechende Konfiguration des radvd, wobei eine Konfigurationsdatei von dem IPv6-Insel-Konfigurations-Modul 17 angelegt bzw. eine vorhandene Konfigurationsdatei modifiziert wird. Das Sendemodul 13 wird veranlasst, die von dem IPv6-Insel-Konfigurations-Modul 17 erstellte bzw. modifizierte Konfiguration zu übernehmen. Dies kann geschehen, indem das Sendemodul 13 veranlasst wird, die neue Konfiguration durch Einlesen der Konfigurationsdatei zu übernehmen. Das Sendemodul 13 kann hierfür beispielsweise gestoppt und neu gestartet werden.

Der Router 10 ist weiterhin ausgebildet und eingerichtet, für den Fall, dass IPv6-Präfixe über das Upstream-Interface 11 gelernt werden, diese automatisch in das unterlagerte Netz 5 weiterzugeben. Er erkannt also automatisch einen IPv6-Normalbetrieb und sorgt dann für eine entsprechende Konfiguration.

Konkret ist der Router 10 ausgebildet und eingerichtet, für den Fall, dass er im IPv6-Inselbetrieb an dem Upstream-Interface 11 eine DHCP-Nachricht empfängt, mittels derer wenigstes ein IPv6-Präfix erfolgreich gemäß RFC 3633 delegiert wird, automatisch in einen IPv6-Normalbetrieb zu wechseln, in welchem das Sendemodul 13 des Routers 10 veranlasst wird, über das Downstream-Interface 12 wenigstens eine Nachricht zu senden, die das wenigstens eine IPv6-Präfix aus der an dem Upstream-Interface 11 empfangenen Nachricht umfasst. Im IPv6-Normalbetireb werden somit automatisch IPV6-Präfixe, die aus überlagerten Nachrichten gelernt werden, an das unterlagerte Inselnetz 5 weitergegeben und in diesem bekannt gemacht.

Der IPv6-Normalbetrieb bzw. der Wechsel in diesen wird dabei über das IPv6-Insel-Detektionsmodul 16 erkannt, welches entsprechend ausgebildet und eingerichtet ist. Das IPv6-Insel-Detektionsmodul 16 signalisiert dem IPv6-Insel-Konfigurations-Modul 17 den IPv6-Normalbetrieb und das IPv6-Insel-Konfigurations-Modul 17 sorgt für die vorstehende Autokonfiguration des Sendemoduls 13.

Insel-Präfixe bzw. im IPv6-Normalbetrieb über das Upstream-Interface 11 gelernte Präfixe werden dabei in Form einer Prefix Information Option (siehe RFC 4861) in den über das Downstream-Interface 12 gesendeten Router Advertisement Nachrichten zusammen mit den SLAAC-Flags "A" (address autoconfiguration) und "L" (on-link) gesendet.

In der FIG 3 sind Präfix und A/L-Flags nur schematisch als Blockelement 20 angedeutet.

Pfeile, welche das Upstream-Interface 11 mit dem IPv6-Insel-Detektionsmodul 16, das IPv6-Insel-Detektionsmodul 16 mit dem IPv6-Insel-Konfigurationsmodul 17, das IPv6-Insel-Konfigurationsmodul 17 mit dem Sendemodul 13, und das Sendemodul 13 mit dem Downstream-Interface 12 verbinden, verdeutlichen die Abläufe.

Der Router 10 ist weiterhin dazu ausgebildet und eingerichtet, zu überwachen, ob er an dem Upstream-Interface 11 Nachrichten, konkret Router-Advertisement- oder auch DHCP-Nachrichten empfängt, mit denen wenigstes eine Domäne als Bestandteil einer DNS-Suchlisten-Option 21 bekannt gegeben wird, und um für den Fall, dass über einen vorgegebenen Zeitraum keine solche Nachricht empfangen wird bzw. wurde, automatisch einen DNS-Inselbetrieb zu aktivieren, in welchem die DNS Zone 22 des lokalen DNS Servers 14 unter Verwendung einer vorkonfigurierten, auf dem Router gespeicherten Insel-Domäne konfiguriert wird, und das Sendemodul 13 veranlasst wird, über das Downstream-Interface 12 wenigstens eine Router-Advertisement-Nachricht zu senden, welche die vorkonfigurierte Insel-Domäne als Bestandteil einer DNS-Suchlisten-Option 21, und eine Adresse 23 des Downstream-Interfaces 12 umfasst.

Der Router 10 ist darüber hinaus dazu ausgebildet und eingerichtet für den Fall, dass im DNS-Inselbetrieb an dem Upstream-Interface 11 eine Nachricht empfangen wird, mit der wenigstes eine Domäne als Bestandteil einer DNS-Suchlisten-Option bekannt gegeben wird, automatisch in einen DNS-Normalbetrieb zu wechseln, in welchem die DNS Zone 22 des lokalen DNS Servers 14 unter Verwendung wenigstens einer Domäne aus der an dem Upstream-Interface 11 empfangenen Nachricht konfiguriert wird, und das Sendemodul 13 zu veranlassen, über das Downstream-Interface 12 wenigstens eine Nachricht zu senden, die wenigstens eine Domäne aus der an dem Upstream-Interface 11 empfangenen Nachricht als Bestandteil einer DNS-Suchlisten-Option 21 und eine Adresse 22 des Downstream-Interfaces 12 umfasst.

Diese Funktionen übernehmen dabei das DNS-Insel-Detektionsmodul 18 und das DNS-Insel-Konfigurationsmodul 19, die jeweils entsprechend ausgebildet und eingerichtet sind. Konkret überwacht das DNS-Insel-Detektionsmodul 18, ob entsprechende Router Advertisement Nachrichten am Upstream-Interface 11 ankommen, und aktiviert und signalisiert den DNS-Inselbetrieb dem DNS-Insel-Konfigurationsmodul 19, welches dann den DNS-Server 14 und das Sendemodul 13 entsprechend konfiguriert. Was die Konfiguration des Sendemoduls 13 angeht, sei auf die vorstehenden Ausführungen im Zusammenhang mit dessen Konfiguration durch das IPv6-Insel-Konfigurationsmodul 17 verwiesen.

Außerhalb des Inselbetriebs wird somit nicht die vorkonfigurierte DNS Domäne 22 als DNS Zone 22 und somit auch als DNS Suchliste 21 benutzt, sondern diejenige DNS Domäne, welche aus überlagerten Router Advertisement Nachrichten gelernt wird.

Im Folgenden werden rein beispielhaft zwei Ausschnitte möglicher Konfigurationsdateien für das Sendemodul 13, konkret für den Router Advertisement Deamon, einmal für den Fall, dass der IPv6- und der DNS-Inselbetrieb aktiv ist (unten als Inselbetrieb bezeichnet), also wenn weder IPv6-Präfixe noch Domänen am Upstream-Interface 11 gelernt werden, und einmal für den Fall, dass der IPv6- und der DNS-Normalbetrieb aktiv ist, diese Informationen also aus Upstream Router Advertisement Nachrichten gelernt werden bzw. wurden (auch als Infrastrukturbetrieb bezeichnet):

```
 Inselbetrieb
 # radvd.conf
 # Inselbetrieb
 interface downstream {
 # Inselpräfix
 prefix 2001:db8:4711:4711::/64 { ... };
 # Insel-DNS Server-Adresse = IP-Adresse downstream interface
 RDNSS 2001:db8:4711:4711::1 { ... };
 # Insel-DNS Suchliste/Suffix
 DNSSL island.local { ... };
 };
 Infrastrukturbetrieb
 # radvd.conf
 # Infrastrukturbetrieb
 interface downstream {
 # per Präfixdelegation gelerntes und vom DHCPv6 Client
 # an das Interface "downstream" zugewiesene Präfix
 prefix 2001:db8:0:1::/64 { ... };
 # Insel-DNS Server-Adresse = IP-Adresse downstream interface
 RDNSS 2001:db8:0:1::1 { ... };
 # Insel-DNS Suchliste/Suffix
 DNSSL cell42.plant2.regiowest.company.com { ... };
 };
```

Diese beispielhaften Konfigurationsdateien können jeweils mit dem IPv6-Insel-Konfigurations-Modul 17 und dem DNS-Insel-Konfigurations-Modul 19 erstellt bzw. entsprechend angepasst worden sein, insbesondere jeweils durch Hinzufügung von Präfix und DNS-Suchliste.

Das Einlesen der Konfigurationsdateien kann, wie vorstehend angemerkt, in an sich bekannter Weise zum Beispiel durch Neustart des Router Advertisement Daemon bewirkt werden.

Wie man sieht, werden für Präfixe und Domänen keine separaten Router-Advertisement-Nachrichten über das Downstream Interface 12 gesendet, sondern die gesendeten Router-Advertisement-Nachrichten umfassen jeweils sowohl ein Präfix als auch eine Domäne (Insel-Präfix bzw. Insel-Domäne bzw. am Upstream-Interface 11 empfangenes Präfix bzw. am Upstream-Interface 11 empfangene Domäne.

Auf Wunsch kann zusätzlich der in der EP 3 091 714 A1 der Siemens AG offenbarte Mechanismus eingesetzt werden, bei dem aus dem Anlagenkontext, insbesondere einer gelernten Domäne und einem dem Router zugeordneten Namen eine eindeutige Domain gebildet wird. Rein beispielhaft sei für eine gelernte Domäne "Maschinenbauer.de." genannt und für den Namen eines Routers "ibs-elchbox", wobei sich dann die eindeutige Domain "ibs-elchbox.maschinenbauer.de." ergeben würde.

Die Netzwerkteilnehmer 1, 2, 3, 6 empfangen Router-Advertisement-Nachrichten, die der Router 10 über das Downstream-Interface 12 sendet und diese können sich unter Verwendung der empfangenen Nachrichten einen voll qualifizierten Domain Namen (FQDN, insbesondere im Sinne von RFC 7719) und eine globale IPv6-Adresse zuordnen bzw. geben. Dabei kann die globale IPv6-Adresse unter Nutzung des IPv6-Präfixes und der FQDN unter Heranziehung der DNS Suchliste 21 vergeben werden. Da auch die Adresse des DNS Servers 14 bekannt gegeben wird, können sich die Teilnehmer 1, 2, 3, 6 im DNS-Server 14 registrieren.

Da die Router Advertisement Nachrichten sowohl im IPv6-Insel-als auch im IPv6-Normalbetrieb als auch im DNS-Insel- als auch im DNS-Normalbetrieb über das Downstream-Interface 12 gesendet werden, und diese in allen Betriebsmodi ein IPv6-Präfix, A/L-Flags, eine IPv6-Adresse des DNS-Servers 14 und eine DNS Suchliste umfassen, können sich die Netzwerkteilnehmer 1, 2, 3, 6 aus dem Netz 5 zu allen Zeiten FQDNs und globale IPv6-Adressen geben und sich registrieren, dies auch für den Fall, dass das Netz 5 sich in einem Inselbetrieb befindet, also ein Inselnetz bildet. Dies ist für die Teilnehmer 1, 2, 3, 6 auch möglich, wenn sie nicht technisch für DHCP ausgestattet sind, wie es im industriellen Umfeld, insbesondere der Automatisierungstechnik, oftmals der Fall ist.

Ein Zugriff auf Teilnehmer 1, 2, 3, 6 über IPv6 von einer Standardapplikation, beispielsweise einem Webbrowser oder einem OPC UA Client 8 ist zu allen Zeiten problemlos möglich.

Da automatisch zwischen dem Inselbetreib und dem Normalbetrieb gewechselt wird, kann das Netz 5 auch problemlos vorübergehend von einer Netz-Infrastruktur getrennt und später wieder verbunden werden.

Da die Konfiguration in allen Betriebsmodi vollständig automatisch erfolgt, ist dabei kein Aufwand und kein IT-Know-How seitens der Anwender erforderlich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum automatischen Konfigurieren eines Routers (10) in einem Netzwerk (5), wobei der Router (10) wenigstens ein mit einem überlagerten Teilnetz und/oder einem überlagerten Router verbundenes oder verbindbares Upstream-Interface (11) und wenigstens ein mit einem unterlagerten Teilnetz (5) verbundenes oder verbindbares Downstream-Interface (12) aufweist,
**dadurch gekennzeichnet, dass** überwacht wird, ob der Router (10) an dem wenigstens einen Upstream-Interface (11) Nachrichten empfängt, mit denen wenigstes eine Domäne bekannt gegeben wird, und für den Fall, dass über einen vorgegebenen Zeitraum keine solche Nachricht empfangen wurde, automatisch ein DNS-Inselbetrieb aktiviert wird, in welchem die DNS Zone (22) eines lokalen DNS Servers (14) des Routers (10) unter Verwendung einer vordefinierten Insel-Domäne konfiguriert wird, und ein Sendemodul (13) des Routers (10) veranlasst wird, wenigstens eine Nachricht über wenigstens ein Downstream-Interface (12) zu senden, welche die vorkonfigurierte Insel-Domäne umfasst.

2. Verfahren nach Anspruch 1, bei dem für den Fall, dass an dem wenigstens einen Upstream-Interface (11) eine Nachricht empfangen wird, mit der wenigstes eine Domäne bekannt gegeben wird, automatisch in einen DNS-Normalbetrieb gewechselt wird, in welchem die DNS Zone (22) des lokalen DNS Servers (14) des Routers (10) unter Verwendung der wenigstens einen Domäne aus der an dem Upstream-Interface (11) empfangenen Nachricht konfiguriert wird, und ein Sendemodul (13) des Routers (10) veranlasst wird, über wenigstens ein Downstream-Interface (12) wenigstens eine Nachricht zu senden, die die wenigstens eine Domäne aus der an dem wenigstens einen Upstream-Interface (11) empfangenen Nachricht umfasst.

3. Verfahren nach Anspruch 1 oder 2, bei dem der Router (10) ein DNS-Insel-Detektionsmodul (18) umfasst, und von dem DNS-Insel-Detektionsmodul (18) überwacht wird, ob an dem wenigstens einen Upstream-Interface (11) Nachrichten empfangen werden, die wenigstes eine Domäne, umfassen, und/oder dass der Router (10) ein DNS-Insel-Konfigurationsmodul (19) umfasst, und das DNS-Insel-Konfigurationsmodul (19) die DNS Zone (22) des lokalen DNS Servers (14) im DNS-Inselbetrieb unter Verwendung der vordefinierten Domäne oder im DNS-Normalbetrieb unter Verwendung der wenigstens einen an dem wenigstens einen Upstream-Interface (11) empfangenen Domäne konfiguriert, und/oder das Sendemodul (13) veranlasst, die wenigstens eine Nachricht im DNS-Inselbetrieb mit der vordefinierten Domäne oder im DNS-Normalbetrieb mit der wenigstens einen an dem wenigsten einen Upstream-Interface (11) empfangenen Domäne zu senden.

4. Verfahren nach einem der vorhergehenden Ansprüche, bei dem es überwacht wird, ob an dem wenigstens einen Upstream-Interface (11) Nachrichten empfangen werden, mittels derer wenigstes ein IPv6-Präfix delegiert wird, und für den Fall, dass über einen vorgegebenen Zeitraum keine solche Nachricht empfangen wurde, automatisch ein IPv6-Inselbetrieb aktiviert wird, in welchem ein Sendemodul (13) des Routers (10) veranlasst wird, über wenigstens ein Downstream-Interface (12) wenigstens eine Nachricht, die ein Insel-Präfix umfasst, zu senden, wobei für den Fall, dass bisher kein Präfix erfolgreich delegiert wurde, ein vordefiniertes Insel-Präfix verwendet wird, und für den Fall, dass ein zuvor delegiertes Präfix verfügbar ist, dieses noch verfügbare Präfix als Insel-Präfix verwendet wird.

5. Verfahren nach Anspruch 4, bei dem das Insel-Präfix in Form einer Prefix Information Option in der wenigstens einen Nachricht gesendet wird.

6. Verfahren nach Anspruch 4 oder 5, bei dem für den Fall, dass an dem wenigstens einen Upstream-Interface (11) eine Nachricht empfangen wird, mittels derer wenigstes ein IPv6-Präfix delegiert wird, automatisch ein IPv6-Normalbetrieb aktiviert wird, in welchem ein Sendemodul (13) des Routers (10) veranlasst wird, über wenigstens ein Downstream-Interface (12) wenigstens eine Nachricht zu senden, die wenigstens ein IPv6-Präfix aus der an dem wenigstens einen Upstream-Interface (11) empfangenen Nachricht umfasst.

7. Verfahren nach einem der Ansprüche 4 bis 6, bei dem der Router (10) ein IPv6-Insel-Detektionsmodul (16) umfasst, und von dem IPv6-Insel-Detektionsmodul (16) überwacht wird, ob an dem wenigstens einen Upstream-Interface (11) Nachrichten empfangen werden, mittels derer wenigstes ein IPv6-Präfix delegiert wird, und/oder der Router ein IPv6-Insel-Konfigurations-Modul (17) umfasst, und das IPv6-Insel-Konfigurations-Modul (17) das Sendemodul (13) veranlasst, im IPv6-Inselbetrieb die wenigstens eine ein Insel-Präfix umfassende Nachricht zu senden.

8. Verfahren nach einem der vorhergehenden Ansprüche, bei dem das Sendemodul (13) des Routers (10) einen Router Advertisement Daemon umfasst oder durch einen solchen gegeben ist.

9. Verfahren zur automatischen Adresskonfiguration eines Teilnehmers (1, 2, 3, 6) eines Netzwerkes (5), bei dem wenigstens ein Netzwerkteilnehmer (1, 2, 3, 6) von einem überlagerten Router (10), der unter Durchführung des Verfahrens nach einem der vorhergehenden Ansprüche konfiguriert wird oder wurde, wenigstens eine Nachricht empfängt, und sich der wenigstens eine Teilnehmer (1, 2, 3, 6) unter Verwendung der von dem Router (10) empfangenen Nachricht einen Namen zuordnet.

10. Router (10) mit wenigstens einem Upstream- (11) und wenigstens einem Downstream-Interface (12), wobei der Router (10) dazu ausgebildet und/oder eingerichtet ist, zu überwachen, ob er an dem wenigstens einen Upstream-Interface (11) Nachrichten empfängt, mit denen wenigstes eine Domäne bekannt gegeben wird, und um für den Fall, dass über einen vorgegebenen Zeitraum keine solche Nachricht empfangen wurde, automatisch einen DNS-Inselbetrieb zu aktivieren, in welchem die DNS Zone (22) eines lokalen DNS Servers (14) des Routers (10) unter Verwendung einer vordefinierten Insel-Domäne konfiguriert wird, und ein Sendemodul (13) des Routers (10) veranlasst wird, über wenigstens ein Downstream-Interface (12) wenigstens eine Nachricht zu senden, welche die vorkonfigurierte Insel-Domäne umfasst.

11. Router nach Anspruch 10, bei dem der Router (10) dazu ausgebildet und/oder eingerichtet ist, für den Fall, dass an dem wenigstens einen Upstream-Interface (11) eine Nachricht empfangen wird, mit der wenigstes eine Domäne, bekannt gegeben wird, automatisch in einen DNS-Normalbetrieb zu wechseln, in welchem die DNS Zone (22) des lokalen DNS Servers (14) unter Verwendung der wenigstens einer Domäne aus der an dem wenigstens einen Upstream-Interface (11) empfangenen Nachricht konfiguriert wird, und ein Sendemodul (13) des Routers (10) veranlasst wird, über wenigstens ein Downstream-Interface (12) wenigstens eine Nachricht zu senden, die die wenigstens eine Domäne aus der an dem wenigstens einen Upstream-Interface (11) empfangenen Nachricht umfasst.

12. Router nach Anspruch 10 oder 11, bei dem der Router ein DNS-Insel-Detektionsmodul (18) umfasst, und das DNS-Insel-Detektionsmodul (18) ausgebildet und/oder eingerichtet ist, um zu überwachen, ob an dem wenigstens einen Upstream-Interface (11) Nachrichten empfangen werden, die wenigstes eine Domäne umfassen, und/oder dass der Router (10) ein DNS-Insel-Konfigurations-modul (19) umfasst, und das DNS-Insel-Konfigurationsmodul (19) ausgebildet und/oder eingerichtet ist, um die DNS Zone (22) des lokalen DNS Servers (14) im DNS-Inselbetrieb unter Verwendung der vordefinierten Domäne oder im DNS-Normalbetrieb unter Verwendung der wenigstens einen an dem wenigstens einen Upstream-Interface (11) empfangenen Domäne zu konfigurieren, und/oder das Sendemodul (13) zu veranlassen, die wenigstens eine Nachricht im DNS-Inselbetrieb mit der vordefinierten Domäne oder im DNS-Normalbetrieb mit der wenigstens einen an dem wenigsten einen Upstream-Interface empfangenen Domäne zu senden.

13. Router nach einem der Ansprüche 10 bis 12, bei dem der Router (10) ausgebildet und/oder eingerichtet ist, um zu überwachen, ob an dem wenigstens einen Upstream-Interface (11) Nachrichten empfangen werden, mittels derer wenigstes ein IPv6-Präfix delegiert wird, und für den Fall, dass über einen vorgegebenen Zeitraum keine solche Nachricht empfangen wurde, automatisch einen IPv6-Inselbetrieb zu aktivieren, in welchem ein Sendemodul (13) des Routers (10) veranlasst wird, über wenigstens ein Downstream-Interface (12) wenigstens eine Nachricht zu senden, die ein Insel-Präfix umfasst, wobei für den Fall, dass bisher kein Präfix erfolgreich delegiert wurde, ein vordefiniertes Insel-Präfix verwendet wird, und für den Fall, dass ein zuvor delegiertes Präfix verfügbar ist, dieses noch verfügbare Präfix als Insel-Präfix verwendet wird.

14. Router nach Anspruch 13, bei dem der Router (10) dazu ausgebildet und/oder eingerichtet ist, für den Fall, dass an dem wenigstens einen Upstream-Interface (11) eine Nachricht empfangen wird, mittels derer wenigstes ein IPv6-Präfix delegiert wird, automatisch in einen IPv6-Normalbetrieb zu wechseln, in welchem ein Sendemodul (13) des Routers (10) veranlasst wird, über wenigstens ein Downstream-Interface (12) wenigstens eine Nachricht zu senden, die wenigstens ein IPv6-Präfix aus der an dem wenigstens einen Upstream-Interface (11) empfangenen Nachricht umfasst.

15. Router nach Anspruch 13 oder 14, bei dem der Router (10) ausgebildet und/oder eingerichtet ist, um das Insel-Präfix in Form einer Prefix Information Option in der wenigstens einen Nachricht zu senden.

16. Router nach einem der Ansprüche 13 bis 15, bei dem der Router (10) ein IPv6-Insel-Detektionsmodul (16) umfasst, und das IPv6-Insel-Detektionsmodul (16) ausgebildet und/oder eingerichtet ist, zu überwachen, ob an dem wenigstens einen Upstream-Interface (11) Nachrichten empfangen werden, mittels derer wenigstes ein IPv6-Präfix delegiert wird, und/oder der Router ein IPv6-Insel-Konfigurationsmodul (17) umfasst, und das IPv6-Insel-Konfigurationsmodul (17) ausgebildet und/oder eingerichtet ist, im IPv6-Inselbetrieb das Sendemodul (13) zu veranlassen, im IPv6-Inselbetrieb die wenigstens eine ein Insel-Präfix umfassende Nachricht zu senden.

17. Router nach einem der Ansprüche 10 bis 16, bei dem das Sendemodul (13) des Routers (10) einen Router Advertisement Daemon umfasst oder durch einen solchen gegeben ist.

18. Computerprogramm umfassend Programmcode-Mittel zur Durchführung des Verfahrens nach einem der Ansprüche 1 bis 9.

19. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 9 durchzuführen.

## Claims

1. Method for automatically configuring a router (10) in a network (5), wherein the router (10) has at least one upstream interface (11) connected or connectable to a higher-level subnetwork and/or a higher-level router and at least one downstream interface (12) connected or connectable to a lower-level subnetwork (5),
**characterized in that** monitoring is performed to determine whether the router (10) receives on the at least one upstream interface (11) messages that are used to announce at least one domain, and if no such message was received over a prescribed period then a DNS island mode is automatically activated in which the DNS zone (22) of a local DNS server (14) of the router (10) is configured using a predefined island domain, and a transmitting module (13) of the router (10) is prompted to send via at least one downstream interface (12) at least one message comprising the preconfigured island domain.

2. Method according to Claim 1,
in which if a message that is used to announce at least one domain is received on the at least one upstream interface (11) then there is an automatic change to a DNS normal mode in which the DNS zone (22) of the local DNS server (14) of the router (10) is configured using the at least one domain from the message received on the upstream interface (11), and a transmitting module (13) of the router (10) is prompted to use at least one downstream interface (12) to send at least one message comprising the at least one domain from the message received on the at least one upstream interface (11).

3. Method according to Claim 1 or 2,
in which the router (10) comprises a DNS island detection module (18), and the DNS island detection module (18) monitors whether messages comprising at least one domain are received on the at least one upstream interface (11), and/or in that the router (10) comprises a DNS island configuration module (19), and the DNS island configuration module (19) configures the DNS zone (22) of the local DNS server (14) using the predefined domain in the DNS island mode or using the at least one domain received on the at least one upstream interface (11) in the DNS normal mode, and/or prompts the transmitting module (13) to send the at least one message with the predefined domain in the DNS island mode or with the at least one domain received on the at least one upstream interface (11) in the DNS normal mode.

4. Method according to one of the preceding claims,
in which monitoring is performed to determine whether messages by means of which at least one IPv6 prefix is delegated are received on the at least one upstream interface (11), and if no such message was received over a prescribed period then an IPv6 island mode is automatically activated in which a transmitting module (13) of the router (10) is prompted to use at least one downstream interface (12) to send at least one message comprising an island prefix, wherein if no prefix was successfully delegated to date then a predefined island prefix is used, and if a previously delegated prefix is available then this prefix that is still available is used as island prefix.

5. Method according to Claim 4,
in which the island prefix is sent in the form of a prefix information option in the at least one message.

6. Method according to Claim 4 or 5,
in which if a message by means of which at least one IPv6 prefix is delegated is received on the at least one upstream interface (11) then an IPv6 normal mode is automatically activated in which a transmitting module (13) of the router (10) is prompted to use at least one downstream interface (12) to send at least one message comprising at least one IPv6 prefix from the message received on the at least one upstream interface (11).

7. Method according to one of Claims 4 to 6,
in which the router (10) comprises an IPv6 island detection module (16), and the IPv6 island detection module (16) monitors whether messages by means of which at least one IPv6 prefix is delegated are received on the at least one upstream interface (11), and/or the router comprises an IPv6 island configuration module (17), and the IPv6 island configuration module (17) prompts the transmitting module (13) to send the at least one message comprising an island prefix in the IPv6 island mode.

8. Method according to one of the preceding claims,
in which the transmitting module (13) of the router (10) comprises a router advertisement daemon or is provided by such.

9. Method for automatic address configuration of a subscriber (1, 2, 3, 6) of a network (5), in which at least one network subscriber (1, 2, 3, 6) receives at least one message from a higher-level router (10) that is or was configured by performing the method according to one of the preceding claims, and the at least one subscriber (1, 2, 3, 6) uses the message received from the router (10) to assign itself a name.

10. Router (10) having at least one upstream interface (11) and at least one downstream interface (12), wherein the router (10) is designed and/or set up to monitor whether it receives on the at least one upstream interface (11) messages that are used to announce at least one domain, and so as, if no such message was received over a prescribed period, to automatically activate a DNS island mode in which the DNS zone (22) of a local DNS server (14) of the router (10) is configured using a predefined island domain, and a transmitting module (13) of the router (10) is prompted to use at least one downstream interface (12) to send at least one message comprising the preconfigured island domain.

11. Router according to Claim 10,
in which the router (10) is designed and/or set up so as, if a message that is used to announce at least one domain is received on the at least one upstream interface (11), to automatically change to a DNS normal mode in which the DNS zone (22) of the local DNS server (14) is configured using the at least one domain from the message received on the at least one upstream interface (11), and a transmitting module (13) of the router (10) is prompted to use at least one downstream interface (12) to send at least one message comprising the at least one domain from the message received on the at least one upstream interface (11).

12. Router according to Claim 10 or 11,
in which the router comprises a DNS island detection module (18), and the DNS island detection module (18) is designed and/or set up to monitor whether messages comprising at least one domain are received on the at least one upstream interface (11), and/or in that the router (10) comprises a DNS island configuration module (19), and the DNS island configuration module (19) is designed and/or set up to configure the DNS zone (22) of the local DNS server (14) using the predefined domain in the DNS island mode or using the at least one domain received on the at least one upstream interface (11) in the DNS normal mode, and/or to prompt the transmitting module (13) to send the at least one message with the predefined domain in the DNS island mode or with the at least one domain received on the at least one upstream interface in the DNS normal mode.

13. Router according to one of Claims 10 to 12,
in which the router (10) is designed and/or set up to monitor whether messages by means of which at least one IPv6 prefix is delegated are received on the at least one upstream interface (11), and, if no such message was received over a prescribed period, to automatically activate an IPv6 island mode in which a transmitting module (13) of the router (10) is prompted to use at least one downstream interface (12) to send at least one message comprising an island prefix, wherein if no prefix was successfully delegated to date then a predefined island prefix is used, and if a previously delegated prefix is available then this prefix that is still available is used as island prefix.

14. Router according to Claim 13,
in which the router (10) is designed and/or set up so as, if a message by means of which at least one IPv6 prefix is delegated is received on the at least one upstream interface (11), to automatically change to an IPv6 normal mode in which a transmitting module (13) of the router (10) is prompted to use at least one downstream interface (12) to send at least one message comprising at least one IPv6 prefix from the message received on the at least one upstream interface (11).

15. Router according to Claim 13 or 14,
in which the router (10) is designed and/or set up to send the island prefix in the form of a prefix information option in the at least one message.

16. Router according to one of Claims 13 to 15,
in which the router (10) comprises an IPv6 island detection module (16), and the IPv6 island detection module (16) is designed and/or set up to monitor whether messages by means of which at least one IPv6 prefix is delegated are received on the at least one upstream interface (11), and/or the router comprises an IPv6 island configuration module (17), and the IPv6 island configuration module (17) is designed and/or set up so as, in the IPv6 island mode, to prompt the transmitting module (13) to send the at least one message comprising an island prefix in the IPv6 island mode.

17. Router according to one of Claims 10 to 16,
in which the transmitting module (13) of the router (10) comprises a router advertisement daemon or is provided by such.

18. Computer program comprising program code means for performing the method according to one of Claims 1 to 9.

19. Computer-readable medium comprising instructions that, when executed on at least one computer, prompt the at least one computer to perform the steps of the method according to one of Claims 1 to 9.

## Revendications

1. Procédé de configuration automatique d'un routeur (10) d'un réseau (5), dans lequel le routeur (10) a au moins une interface (11) d'amont reliée ou pouvant l'être à un sous-réseau surjacent et/ou à un routeur surjacent et au moins une interface (12) d'aval reliée ou pouvant l'être à un sous-réseau (5) sous-jacent, **caractérisé en ce que** l'on contrôle si le routeur (10) reçoit sur la au moins une interface (11) d'amont des messages, par lesquels au moins un domaine est donné comme connu et dans le cas où, sur un laps de temps donné à l'avance, un message de ce genre n'a pas été reçu, on active automatiquement un fonctionnement isolé DNS, dans lequel la zone (22) DNS d'un serveur (14) DNS local du routeur (10) est configurée en utilisant un domaine isolé défini à l'avance et un module (13) d'émission du routeur (10) fait en sorte d'envoyer au moins par au moins une interface (12) d'aval, un message qui comprend le domaine isolé préconfiguré.

2. Procédé suivant la revendication 1, dans lequel, dans le cas où on reçoit sur la au moins une interface (11) d'amont, un message, par lequel le au moins un domaine est donné comme connu, on passe automatiquement à un fonctionnement normal DNS, dans lequel on configure la zone (22) DNS du serveur (14) DNS local du routeur (10) en utilisant le au moins un domaine à partir du message reçu sur l'interface (11) d'amont, et un module (13) d'envoi du routeur (10) fait en sorte d'envoyer par au moins une interface (12) d'aval au moins un message, qui comprend le au moins un domaine, à partir du message reçu sur la au moins une interface (11) d'amont.

3. Procédé suivant la revendication 1 ou 2, dans lequel le routeur (10) comprend un module (18) de détection isolée DNS et on contrôle, par le module (18) de détection isolé DNS, si sont reçus sur la au moins une interface (11) d'amont des messages, qui comprennent au moins un domaine, et/ou en ce que le routeur (10) comprend un module (19) de configuration isolé DNS et le module (19) de configuration isolé DNS configure la zone (22) DNS du serveur (14) DNS local en fonctionnement isolé DNS, en utilisant des domaines définis à l'avance ou en fonctionnement normal DNS, en utilisant le au moins un domaine reçu sur la au moins une interface (11) d'amont et/ou le module (13) d'émission fait en sorte d'envoyer le au moins un message en fonctionnement isolé DNS ayant les domaines définis à l'avance ou en fonctionnement normal DNS ayant le au moins un domaine, reçu sur la au moins une interface (11) d'amont.

4. Procédé suivant l'une des revendications précédentes, dans lequel on contrôle si l'on a reçu sur la au moins une interface (11) d'amont des messages au moyen desquels on délègue au moins un préfixe IPv6 et dans le cas où il n'a pas été reçu de message de ce genre sur un laps de temps donné à l'avance, on active automatiquement un fonctionnement isolé IPv6, dans lequel un module (13) d'envoi du routeur (10) envoie par au moins une interface (12) d'aval au moins un message qui comprend un préfixe d'isolement, dans lequel, dans le cas où il n'a pas été délégué jusqu'ici avec succès de préfixe, on utilise un préfixe d'isolement défini à l'avance et dans le cas où un préfixe délégué auparavant est disponible, on utilise ce préfixe encore disponible comme préfixe d'isolement.

5. Procédé suivant la revendication 4, dans lequel on envoie le préfixe d'isolement sous la forme d'une Préfix Information Option dans le au moins un message.

6. Procédé suivant la revendication 4 ou 5, dans lequel, dans le cas où on reçoit sur la au moins une interface (11) d'amont un message au moyen duquel on délègue au moins un préfixe Ipv6, on active automatiquement un fonctionnement normal IPv6, dans lequel un module (13) d'émission du routeur (10) fait en sorte d'envoyer par au moins une interface (12) d'aval au moins un message, qui comprend au moins un préfixe IPv6 à partir du message reçu sur la au moins une interface (11) d'amont.

7. Procédé suivant l'une des revendications 4 à 6, dans lequel le routeur (10) comprend un module (16) de détection d'isolement IPv6 et on contrôle par le module (16) de détection d'isolement IPv6 s'il a été reçu sur la au moins une interface (11) d'amont, des messages, aux moyens desquels on délègue au moins un préfixe Ipv6 et/ou le routeur comprend un module (17) de configuration IPv6 et le module (17) de configuration d'isolement IPv6 fait en sorte que le module (13) d'émission envoie, en fonctionnement d'isolement IPv6 normal, le au moins un message comprenant un préfixe d'isolement.

8. Procédé suivant l'une des revendications précédentes, dans lequel le module (13) d'émission du routeur (10) comprend un Router Advertisement Daemon ou est donné par un routeur de ce genre.

9. Procédé de configuration automatique d'adresse d'un participant (1, 2, 3, 6) à un réseau (5), dans lequel au moins un participant (1, 2, 3, 6) au réseau reçoit d'un routeur (10) supérieur hiérarchiquement, qui est configuré ou qui a été configuré en mettant en œuvre le procédé suivant l'une des revendications précédentes, au moins un message et le au moins un participant (1, 2, 3, 6) s'affecte une dénomination en utilisant le message reçu par le routeur (10).

10. Routeur (10) ayant au moins une interface (11) d'amont et au moins une interface (12) d'aval, dans lequel le routeur (10) est constitué et/ou conçu pour contrôler s'il reçoit sur la au moins une interface (11) d'amont des messages, par lesquels au moins un domaine est donné comme connu et pour le cas où, pendant un laps de temps donné à l'avance, un message de ce genre n'a pas été reçu, activer automatiquement un fonctionnement isolé DNS, dans lequel la zone (22) DNS d'un serveur (14) DNS local du routeur (10) est configurée en utilisant un domaine isolé défini à l'avance et un module (13) d'envoi du routeur (10) fait en sorte d'envoyer par au moins une interface (12) d'aval au moins un message, qui comprend le domaine isolé configuré à l'avance.

11. Routeur suivant la revendication 10, dans lequel le routeur (10) est constitué et/ou conçu pour, dans le cas où il a été reçu sur la au moins une interface (11) d'amont un message, par lequel au moins un domaine est donné comme connu, passer automatiquement dans un fonctionnement normal DNS, dans lequel la zone (22) DNS du serveur (14) DNS local du routeur (10), en utilisant le au moins un domaine à partir du message reçu sur l'interface (11) d'amont et un module (13) d'envoi du routeur (10), fait en sorte d'envoyer par au moins une interface (12) d'aval au moins un message, qui comprend le au moins un domaine à partir du message reçu sur la au moins une interface (11) d'amont.

12. Routeur suivant la revendication 10 ou 11, dans lequel le routeur comprend un module (18) de détection d'isolement DNS et le module (18) de détection d'isolement DNS est constitué et/ou conçu pour contrôler s'il est reçu sur la au moins une interface (11) d'amont des messages, qui comprennent au moins un domaine, et/ou en ce que le routeur (10) comprend un module (19) de configuration d'isolement DNS et le module (19) de configuration d'isolement DNS est constitué et/ou conçu pour configurer la zone (22) DNS du serveur (14) DNS local en fonctionnement isolé DNS, en utilisant les domaines définis à l'avance ou en fonctionnement normal DNS, en utilisant le au moins un domaine reçu sur la au moins une interface (11) d'amont et/ou pour faire en sorte que le module (13) d'émission envoie le au moins un message en fonctionnement isolé DNS ayant les domaines définis à l'avance ou en fonctionnement normal DNS ayant le au moins un domaine reçu sur la au moins une interface (11) d'amont.

13. Routeur suivant l'une des revendications 10 à 12, dans lequel le routeur (10) est constitué et/ou conçu pour contrôler si l'on a reçu sur la au moins une interface (11) d'amont des messages, au moyen desquels on délègue au moins un préfixe IPv6 et, dans le cas où il n'a pas été reçu de message de ce genre sur un laps de temps donné à l'avance, pour activer automatiquement un fonctionnement isolé IPv6, dans lequel un module (13) d'envoi du routeur (10) fait en sorte d'envoyer par au moins une interface (12) d'aval au moins un message, qui comprend un préfixe d'isolement, dans lequel, dans le cas où il n'a pas été délégué jusqu'ici avec succès de préfixe, on utilise un préfixe d'isolement défini à l'avance et dans le cas où un préfixe délégué auparavant est disponible, on utilise ce préfixe encore disponible comme préfixe d'isolement.

14. Routeur suivant la revendication 13, dans lequel le routeur (10) est constitué et/ou conçu pour dans le cas où on reçoit sur la au moins une interface (11) d'amont un message au moyen duquel on délègue au moins un préfixe Ipv6, on passe automatiquement un fonctionnement normal IPv6, dans lequel un module (13) d'émission du routeur (10) envoie par au moins une interface (12) d'aval au moins un message, qui comprend au moins un préfixe IPv6 à partir du message reçu sur la au moins une interface (11) d'amont.

15. Routeur suivant la revendication 13 ou 14, dans lequel le routeur (10) est constitué et/ou conçu pour envoyer le préfixe d'isolement sous la forme d'une Préfix Information Option dans le au moins un message.

16. Routeur suivant l'une des revendications 13 à 15, dans lequel le routeur (10) comprend un module (16) de détection d'isolement IPv6 et le module (16) de détection d'isolement IPv6 est constitué et/ou conçu pour contrôler s'il a été reçu, sur la au moins une interface (11) d'amont, des messages, aux moyens desquels on délègue au moins un préfixe Ipv6 et/ou le routeur comprend un module (17) de configuration IPv6 et le module (17) de configuration d'isolement IPv6 fait en sorte que le module (13) d'émission envoie, en fonctionnement d'isolement IPv6 normal, le au moins un message comprenant un préfixe d'isolement.

17. Routeur suivant l'une des revendications 10 à 16, dans lequel le module (13) d'envoi du routeur (10) comprend un Router Advertisement Daemon ou est donné par un routeur de ce genre.

18. Programme d'ordinateur comprenant des moyens de code de programme pour effectuer le procédé suivant l'une des revendications 1 à 9.

19. Support déchiffrable par ordinateur, qui comprend des instructions qui, lorsqu'elles sont réalisées sur au moins un ordinateur, font que le au moins ordinateur effectue les stades du procédé suivant l'une des revendications 1 à 9.
